# EUROPÄISCHE PATENTSCHRIFT

(11) **EP 2 839 943 B1**
(45) Veröffentlichungstag und Bekanntmachung des Hinweises auf die Patenterteilung: **04.09.2019**
(21) Anmeldenummer: 14176902.6
(22) Anmeldetag: 14.07.2014
(51) Int. Cl.: B29C 48/40, B29C 48/92, B29C 48/25, B29B 7/48, B29B 7/72

(54) **Extruder und Verfahren zur Steuerung des Drehmoments**
Extruder and method of torque control
Extrudeuse et méthode de contrôle de torque

(30) Priorität: 09.08.2013 DE 102013108629
(43) Veröffentlichungstag der Anmeldung: 25.02.2015
(73) Patentinhaber: Leistritz Extrusionstechnik GmbH, 90459 Nürnberg (DE)
(72) Erfinder: Rechter, Frank, 97215 Uffenheim OT Welbhausen (DE); Wolf, Sven, 90522 Oberasbach (DE)
(74) Vertreter: Lindner Blaumeier Patent- und Rechtsanwälte

(56) Entgegenhaltungen:
- EP-A2- 2 065 162
- EP-A2- 2 179 834
- WO-A1-2004/026559
- DE-A1- 19 503 508
- JP-A- 2000 225 641
- JP-A- 2002 113 769

## Beschreibung

Die Erfindung betrifft einen Extruder, umfassend ein Arbeitsteil bestehend aus einem Zylinder und wenigstens zwei darin drehbar aufgenommenen Schneckenwellen, ein Getriebe mit wenigstens zwei Abtriebswellen, wobei jede Abtriebswelle mit einer Schneckenwelle über ein Verbindungselement drehfest verbunden ist, einen das Getriebe antreibenden Motor, der mit dem Getriebe über eine Kupplung gekoppelt ist, sowie eine Steuerungseinrichtung.

Derartige Extruder sind zum Beispiel den Druckschriften EP2065162 A2 und JP2002113769 A zu entnehmen. Sie dienen bekanntlich der Aufbereitung von Massen, die im Arbeitsteil respektive dem Zylinder über eine oder mehrere dort drehende Schneckenwellen, auch Extruderschnecken genannt, bearbeitet werden. Lediglich exemplarisch sind Kunststoffmassen zu nennen, die im Extruder aufgeschmolzen und compoundiert werden, um nachfolgend weiterverarbeitet zu werden, beispielsweise zur Bildung von Kunststoffgranulat oder im Rahmen von Spritzgussarbeiten und zur Herstellung von Bauteilen und Ähnlichen. Zu nennen sind des Weiteren exemplarisch pharmazeutische Massen, die der Herstellung von Arzneimitteln beispielsweise in Tablettenform dienen. Auch hier werden die entsprechenden Stoffe im Zylinder über die Schnecken bearbeitet und gemischt etc., um die gewünschte homogene Zusammensetzung des Extrudats zu erzielen. Um dies zu ermöglichen sind am Arbeitsteil vorgesehen respektive dem Arbeitsteil zugeordnet eine oder mehrere Einrichtungen wie beispielsweise entsprechende Zuführeinrichtungen, über die die zu verarbeitenden Stoffe dosiert aufgegeben werden, oder Heizeinrichtungen, die der Temperierung des Zylinders oder der Zylinderabschnitte, aus denen ein solcher Zylinder üblicherweise zusammengesetzt ist, dienen und Ähnliches. Auch im Lebensmittelbereich werden häufig entsprechende Massen unter Verwendung eines Extruders aufbereitet. Wesentlich für die Funktion des Extruders ist natürlich der Antrieb der wenigstens zwei Schneckenwellen, da über den Antrieb sowohl das Drehmoment der Schnecken als auch die Drehzahl der Schnecken, die relevant für die in das aufzubereitende Material eingebrachte Energie sind, eingestellt werden. Dies geschieht über einen Motor und ein entsprechendes Untersetzungsgetriebe, das mit der oder den Schneckenwellen gekoppelt ist. Der Motor ist üblicherweise über eine Überlastkupplung mit dem Getriebe gekoppelt, wobei die Überlastkupplung mit einer entsprechenden schneckenseitig gegebenen Überlast öffnet und Getriebe und Motor trennt. Der grundsätzliche Aufbau und die Funktion eines solchen Extruders ist hinlänglich bekannt.

Im Überlastfall öffnet die Kupplung nur, wenn das Summendrehmoment der beiden Schneckenwellen, das über die Abtriebswellen und das Getriebe an der einen Kupplungsseite anliegt, größer ist als das durch die Auslegung und Dimensionierung der Überlastkupplung definierte Abschaltmoment. Dann und nur dann öffnet sich die Überlastkupplung, bei der es sich um eine mechanisch trennende Kupplung handelt, bei der beispielsweise federbelastete Kugeln, die einer Kupplungsseite zugeordnet sind, in entsprechende Kalotten, die der anderen Kupplungsseite zugeordnet sind, eingreifen und bei Anliegen eines Abschaltmoments aus den Kalotten wandern, wodurch die Kupplung durchrutscht respektive öffnet. Das Abschaltmoment muss folglich unmittelbar an der Kupplung anliegen, was zur Folge hat, dass das tatsächliche, an den Schneckenwellen gegebene Moment noch etwas höher ist, da ein gewisser Momentenverlust im mechanischen Strang von den Schneckenwellen zur Kupplung gegeben ist respektive auch ein gewisser Zeitfaktor eine Rolle spielt, da ein Anstieg des schneckenwellenseitigen Drehmoments etwas zeitlich verzögert an die Kupplung gegeben wird. Schneckenwellenseitig kann also bereits eine Überlast gegeben sein, die kupplungsseitig noch nicht anliegt. Dies kann sich nachteilig auf den Betrieb des Extruders wie auch insbesondere die Schneckenwellen und deren Verschleiß auswirken.

Der Erfindung liegt damit das Problem zugrunde, einen Extruder anzugeben, der demgegenüber verbessert ist.

Zur Lösung dieses Problems ist erfindungsgemäß vorgesehen ein Extruder umfassend ein Arbeitsteil bestehend aus einem Zylinder und wenigstens zwei darin drehbar aufgenommenen Schneckenwellen, ein Getriebe mit wenigstens zwei Abtriebswellen, wobei jede Abtriebswelle mit einer Schneckenwelle über ein Verbindungselement drehfest verbunden ist, einen das Getriebe antreibenden Motor, der mit dem Getriebe über eine Kupplung gekoppelt ist, sowie eine Steuerungseinrichtung, wobei jedem Verbindungselement oder jeder Abtriebswelle eine separate Messeinrichtung zur Ermittlung des anliegenden Drehmoments zugeordnet ist, wobei die Messeinrichtungen mit der Steuerungseinrichtung kommunizieren, die in Abhängigkeit der einzelnen ermittelten Drehmomente die als schaltbare Kupplung ausgeführte Kupplung steuert, wobei die Steuerungseinrichtung sowohl zum Öffnen der Kupplung ausgebildet ist, wenn ein ermitteltes Drehmoment einen Drehmomentgrenzwert übersteigt, als auch, wenn der Unterschied zwischen den beiden ermittelten Drehmomenten einen Grenzwert übersteigt.

Erfindungsgemäß werden Messeinrichtungen eingesetzt, die individuell die schneckenwellenseitig anliegenden oder zuzuordnenden Drehmomente messen. Die Messeinrichtungen sind jeweils entweder einem Verbindungselement, beispielsweise einer Verbindungsmuffe, über die ein Schneckenwellenschaft mit einer Abtriebswelle gekoppelt ist, zugeordnet, oder der Abtriebswelle selbst, je nachdem, wo die jeweilige Messeinrichtung am besten verbaut werden kann. Jede Messeinrichtung liefert folglich ein individuelles Drehmomentsignal, das die Höhe des anliegenden Ist-Moments angibt. Da diese Signale quasi unmittelbar an respektive nahe an den Schneckenwellen gemessen werden, sind sie folglich eindeutig den entsprechenden Schneckenwellen zuzuordnen.

Die Drehmomentsignale werden der Steuerungseinrichtung gegeben, die diese verarbeitet. Der Steuerungseinrichtung ist also der wellenindividuelle Drehmomentverlauf respektive das jeweilige Ist-Moment bekannt. Gestützt auf diese individuellen Momentinformationen ist die Steuerungseinrichtung nun dazu ausgebildet, bei Vorliegen entsprechender Rand- bzw. Auslösebedingungen die Kupplung anzusteuern, die als schaltbare Kupplung ausgeführt ist. Die Kupplung kann also aktiv durch Anlegen eines Steuerungsbefehles geöffnet werden, unabhängig davon, ob nun ein hinreichend hohes Summenmoment anliegt oder nicht. Dies bietet die Möglichkeit, unter Beobachtung der realen Momentenverhältnisse an den einzelnen Schnecken zum Schutz des Extruders respektive der Schneckenwellen etc. die Kupplung im Bedarfsfall öffnen zu können.

Hierdurch sind eine Reihe von besonderen Vorteilen erreichbar. Vor allem bei Extrudern, die mehrere Seitenbeschickungen, also Zuführeinrichtungen, die von der Seite entsprechendes Material zuführen, aufweisen, kann das Drehmoment von linker und rechter Schneckenwelle stark differieren. Dies kann dazu führen, dass die eine Schnecke bereits extrem hoch belastet respektive überlastet ist, während an der anderen noch ein tolerables Drehmoment anliegt. Das Summendrehmoment jedoch hat den Wert des Abschaltdrehmoments noch nicht erreicht, so dass eine normale Kupplung nicht öffnen würde. Durch Beobachtung der schneckenindividuellen Drehmomente kann jedoch der Überlastfall an einer Schneckenwelle, an der also ein höheres Drehmoment als das zulässige Nenndrehmoment anliegt, erfasst werden, so dass die Kupplung durch Ansteuerung über die Steuerungseinrichtung aktiv geöffnet werden kann.

Bei sehr langen Strecken führt darüber hinaus eine ungleichmäßige Aufteilung des Drehmoments auf die beiden Schneckenwellen zu ungleichen Verdrehungen der Schneckenschäfte um die Längsachse, woraus resultierend es mitunter zu einem Berühren der Schneckenelemente und einen Momentenanstieg kommen kann. Auch dies kann durch entsprechende Auswertung der individuellen, den Schneckenwellen zugeordneten Drehmomente erfasst werden.

Die Steuerungseinrichtung ist erfindungsgemäß zum aktiven Öffnen der Kupplung bei Vorliegen unterschiedlicher Rand- oder Auslösebedingungen ausgebildet. Erfindungsgemäß kann die Steuerungseinrichtung die Kupplung öffnen, wenn ein ermitteltes Drehmoment einen Drehmomentgrenzwert übersteigt. Jeder Schneckenwelle ist also ein definierter Drehmomentgrenzwert zugeordnet, der im Bereich des Nenndrehmoments oder etwas darüber liegt. Üblicherweise liegt der Drehmomentgrenzwert über dem Nennmomentwert, da in der Regel ein Abschaltmoment - sofern ein solches definiert ist - ca. 120 - 140 % des Nennmoments der beiden Schneckenwellen entspricht. In der Steuerungseinrichtung sind folglich zu den jeweiligen Schneckenwellen entsprechende Drehmomentgrenzwerte hinterlegt. Diese Drehmomentgrenzwerte können selbstverständlich auch je nach Art und Typ der verwendeten Schneckenwelle variieren. So können über Kompaktschnecken, also Schnecken, die aus einem Materialblock herausgearbeitet sind, höhere Drehmomente übertragen werden, als über sogenannte Steckschnecken, bei denen einzelne Schneckenelemente auf einen Schneckenschaft gesteckt sind. Auch abhängig von den unterschiedlichen Arbeitszonen, die an der Schneckenwelle ausgebildet sind und die das Material jeweils unterschiedlich bearbeiten, kann eine Drehmomentvariation gegeben sein, so dass diesbezüglich entsprechend unterschiedliche Drehmomentgrenzwerte in der Steuerungseinrichtung abgelegt sind. Je nachdem, welche Schneckenwellen nun verbaut sind, ist die Steuerungseinrichtung in der Lage, gestützt auf die entsprechenden zugeordneten Drehmomentgrenzwerte zu überwachen, ob nun ein Ist-Moment, das über eine Messeinrichtung erfasst wurde, einen Drehmomentgrenzwert erreicht respektive übersteigt. In einem solchen Fall folgt unmittelbar die Ansteuerung der Kupplung zum Öffnen derselben, wobei in diesem Fall das rechnerische Summenmoment, wie es im Stand der Technik allein zum Öffnen der Kupplung anliegen muss, noch nicht erreicht ist.

Kumulativ hierzu öffnet die Steuerungseinrichtung die Kupplung auch, wenn der Unterschied zwischen den beiden ermittelten Drehmomenten einen Grenzwert übersteigt. Die an den einzelnen Schneckenwellen anliegenden Ist-Drehmomente können, müssen jedoch nicht übereinstimmen. Dies kann daraus resultieren, dass z. B. die Zuführeinrichtungen nur von einer Seite her arbeiten, mithin also nur die eine Schneckenwelle unmittelbar mit neu aufzugebenden Material beladen wird und Ähnlichem. Stellt sich nun im Rahmen der kontinuierlichen Ist-Drehmomenterfassung und der Verarbeitung der entsprechenden Messsignale heraus, dass ein zu großer Drehmomentunterschied zwischen den einzelnen aufgenommenen Ist-Drehmomentwerten gegeben ist, so kann auch dies als eine zu einem aktiven Öffnen der Kupplung durch Ansteuerung der Steuerungseinrichtung führende Abschaltbedingung gewertet werden.

Eine weitere, erfindungsgemäß zu den beiden vorgenannten, grundsätzlich implementierten Öffnungsbedingungen kumulativ implementierbare Öffnungsbedingung kann vorsehen, dass die Steuerungseinrichtung die Kupplung öffnet, wenn der Gradient des Anstiegs eines ermittelten Drehmoments einen Gradientengrenzwert übersteigt. Kommt es, auch nur an einer Schneckenwelle, zu einem sehr schnellen Anstieg des zugeordneten und am Verbindungselement respektive der Abtriebswelle erfassten Drehmoments, so kann dies auf einen sich anbahnenden Überlastfall hinweisen. Ein solcher starker Anstieg kann beispielsweise auf eine Berührung der beiden Schneckenwellen zurückzuführen sein, oder auf zu hoher Materialdichte und Ähnliches. Wird nun auf aufgrund der kontinuierlichen Ist-Drehmomenterfassung und deren zeitlichen Auswertung erfasst, dass der Gradient, mit dem der Ist-Drehmomentwert einer Schneckenwelle ansteigt, hinreichend steil ist und einen Gradientengrenzwert übersteigt, so kann auch dies als unmittelbare Abschaltbedingung seitens der Steuerungseinrichtung erkannt werden, die daraufhin die Kupplung ansteuert und öffnet.

Eine Weitere, ebenfalls bei Bedarf kumulativ seitens der Steuerungseinrichtung implementierte Abbruchbedingung kann vorsehen, dass die Steuerungseinrichtung die Kupplung öffnet, wenn der zeitliche Verlauf eines ermittelten Drehmoments eine Schwingung zeigt, deren Amplitude größer ist als eine Vergleichsamplitude. Es hat sich herausgestellt, dass das Drehmoment des arbeitenden Extruders nicht konstant ist, sondern stets eine leichte Schwingung zeigt. Dies resultiert aus dem kontinuierlichen Aufgabebetrieb des Materials, der Förderung des Materials im Inneren des Zylinders wie natürlich auch aus der Schneckenrotation selbst. Eine solche Schwingung ist tolerabel, wenn die Amplitude nicht zu hoch ist. Die Steuerungseinrichtung ist nun in der Lage, durch Auswertung des zeitlichen aufgenommene Drehmomentverlaufs einerseits die Schwingung zu erkennen, andererseits aber auch die entsprechende Amplitudenhöhe zu erfassen. Ist nun die Schwingungsamplitude größer als eine Vergleichsamplitude, so kann auch dieses Vergleichsergebnis als unmittelbares Abbruchkriterium gewertet werden, was dazu führt, dass die Steuerungseinrichtung die Kupplung ansteuert und aktiv öffnet.

Wie beschrieben sind zumindest die beiden erstgenannten Abschaltmodalitäten in der Steuerungseinrichtung implementiert, wobei bevorzugt alle vier Abschaltmodalitäten softwaremäßig in der Steuerungseinrichtung implementiert sind, so dass die Steuerungseinrichtung in der Lage ist, die vier unterschiedlichen Abbruchmöglichkeiten erfassen und entsprechend reagieren zu können.

Zweckmäßig ist es, wenn die Steuerungseinrichtung zeitgleich mit oder unmittelbar nach dem Öffnen der Kupplung einen Frequenzumrichter zur Reduzierung der Drehzahl des Motors ansteuert. Wird die Kupplung geöffnet, dreht der Motor quasi leer. Zweckmäßig ist es nun, wenn mit dem Öffnen der Kupplung oder zeitlich gesehen kurz danach auch die Motordrehzahl reduziert wird, was über die Steuerungseinrichtung durch entsprechende Ansteuerung eines Frequenzumrichters, der dem Motor vorgeschaltet respektive zugeordnet ist, erfolgt. Das heißt, dass mit dem Öffnen der Kupplung umgehend auch eine Reduzierung der Motordrehzahl einhergeht, wobei der Motor auch abgeschaltet werden kann respektive die Drehzahl auf null reduziert werden kann.

Erfindungsgemäß kommt eine schaltbare Kupplung zum Einsatz. Diese kann entweder pneumatisch betätigbar sein oder elektromagnetisch. Eine pneumatisch betätigbare schaltbare Kupplung arbeitet derart, dass die beiden Reibscheiben der Kupplung durch hohen Luftdruck gegeneinander gedrückt werden. Je höher der Luftdruck, umso höher das Reibmoment und damit umso höher das übertragbare Drehmoment. Soll nun die Kupplung geöffnet werden, wird über die Steuerungseinrichtung eine entsprechende Pumpe oder dergleichen angesteuert und schlagartig der Luftdruck reduziert, so dass die Reibscheiben nicht mehr aktiv gegeneinander gedrückt werden können und folglich die eine Kupplungsseite relativ zur anderen Kupplungsseite frei drehen kann.

Im Falle einer elektromagnetisch betätigbaren Kupplung wird über einen hinreichend starken Elektromagneten oder eine mehrere solcher Elektromagneten umfassende Anordnung die eine Reibplatte gegen die andere Reibplatte gezogen oder eine Verzahnungsscheibe gegen eine andere Verzahnungsscheibe gezogen.

Je höher die über dieses elektromagnetische Stellelement die zum Formschluss führende Kraft ist, umso höher ist das übertragbare Drehmoment. Soll nun die Kupplung geöffnet werden, so wird der oder werden die Elektromagnete abgeschaltet, die vormals gegeneinander gedrückten oder aneinander gezogenen Platten oder Verzahnungen geraten außer Eingriff, was beispielsweise dadurch sehr abrupt ist, als sie über den Elektromagneten gegen die Rückstellkraft von Federelementen etc. bewegt werden. Die Kupplung öffnet auch hier unmittelbar, jedoch stets wie auch im Pneumatikfall gesteuert über die Steuerungseinrichtung.

Die Messeinrichtung selbst kann eine berührungslos arbeitende Messeinrichtung sein, insbesondere unter Verwendung eines magnetoelastischen Elements. Als ein solches wird bevorzugt das Verbindungselement genutzt, wie aber auch die Abtriebswellen hierzu dienen können. Das Verbindungselement oder die Abtriebswellen werden in diesem Fall mit einer remanenten Magnetisierung versehen, die ein Magnetfeld erzeugt, das in Abhängigkeit des gegebenen Drehmoments aufgrund der Belastung des Verbindungselements respektive der Abtriebswelle und damit der einhergehenden Gefügebeeinflussung veränderbar ist. Ein positionsfest angeordneter Magnetsensor, beispielsweise ein Hallsensor oder Ähnliches, ist nun in der Lage, dieses Magnetfeld respektive die Feldveränderung zu erfassen und hieraus die Höhe des Drehmoments abzuleiten, sofern dies nicht in der Steuerungseinrichtung geschieht. Es erfolgt also eine Drehmomenterfassung durch Überwaschung eines Magnetfelds.

Eine andere berührungslos arbeitende Messeinrichtung kann eine optische Messeinrichtung sein. Denkbar ist schließlich auch die Verwendung eines Dehnungsmessstreifens, der am Verbindungselement oder der Abtriebswelle angeordnet ist und der je nach Wellen- oder Elementtorsion ein entsprechendes Signal liefert. In diesem Fall läuft also die Messeinrichtung quasi mit dem Verbindungselement respektive der Abtriebswelle, die Signale werden in geeigneter Weise abgegriffen und an die Steuerungseinrichtung gegeben.

Neben dem Extruder selbst betrifft die Erfindung ferner ein Verfahren zum Betrieb eines Extruders, umfassend ein Arbeitsteil bestehend aus einem Zylinder und wenigstens zwei darin drehbar aufgenommenen Schneckenwellen, ein Getriebe mit wenigstens zwei Abtriebswellen, wobei jede Abtriebswelle mit einer Schneckenwelle über ein Verbindungselement drehfest verbunden ist, einen das Getriebe antreibenden Motor, der mit dem Getriebe über eine Kupplung gekoppelt ist, sowie eine Steuerungseinrichtung, wobei jedem Verbindungselement oder jeder Abtriebswelle eine separate Messeinrichtung zur Ermittlung des anliegenden Drehmoments zugeordnet ist, wobei die Messeinrichtung mit der Steuerungseinrichtung kommuniziert, die in Abhängigkeit der einzelnen ermittelten Drehmomente die als schaltbare Kupplung ausgeführte Kupplung sowohl öffnet, wenn ein ermitteltes Drehmoment einen Drehmomentgrenzwert übersteigt, als auch wenn der Unterschied zwischen den beiden ermittelten Drehmomenten einen Grenzwert übersteigt.

Darüber hinaus kann die Steuerungseinrichtung die Kupplung zusätzlich öffnen, wenn der Gradient des Anstiegs eines ermittelten Drehmoments einen Gradientengrenzwert übersteigt, und/oder wenn der zeitliche Verlauf eines ermittelten Drehmoments eine Schwingung zeigt, deren Amplitude größer ist als eine Vergleichsamplitude.

Die Steuerungseinrichtung ist dazu ausgebildet, die Kupplung zu öffnen, wenn eine der zumindest zwei, vorzugsweise vier zuvor definierten Auslösebedingungen erkannt wird, das heißt, dass softwaretechnisch die beiden, insbesondere alle vier Arbeits- respektive Steuervarianten steuereinrichtungsseitig implementiert sind.

Selbstverständlich sind steuereinrichtungsseitig auch die entsprechenden Grenz- oder Vergleichswerte, die zum Durchführen der jeweiligen Drehmomentwertanalysen oder Ähnliches benötigt werden, abgelegt.

Weiterhin kann verfahrensgemäß vorgesehen sein, dass die Steuerungseinrichtung zeitglich mit oder unmittelbar nach dem Öffnen der Kupplung einen Frequenzumrichter zur Reduzierung der Drehzahl des Motors ansteuert. Das heißt, dass die Steuerungseinrichtung letztlich in der Lage ist, den Extruder in einen sicheren Zustand zu überführen, wobei die Kupplung geöffnet und der Motor heruntergefahren ist.

Wesentlich für den erfindungsgemäßen Extruder respektive das erfindungsgemäße Verfahren ist, dass ein zu einem Abschalten führender Umstand erfasst wird, bevor an der Kupplung tatsächlich ein entsprechend hinreichend hohes Abschaltdrehmoment anliegt und die Kupplung letztlich aus rein mechanischen Gründen öffnen würde. Dies deshalb, als an den Schneckenwellen respektive den Verbindungselementen und Abtriebswellen die jeweiligen Ist-Drehmomente gemessen werden, die in diesem Fall nicht als Summenmoment betrachtet werden, sondern individuell der Ansteuerung zugrunde liegen. Es werden folglich Drehmomente oder Drehmomentverläufe berücksichtigt, wie sie tatsächlich an den arbeitenden und zu schützenden Komponenten, nämlich den Schneckenwelle, anliegen.

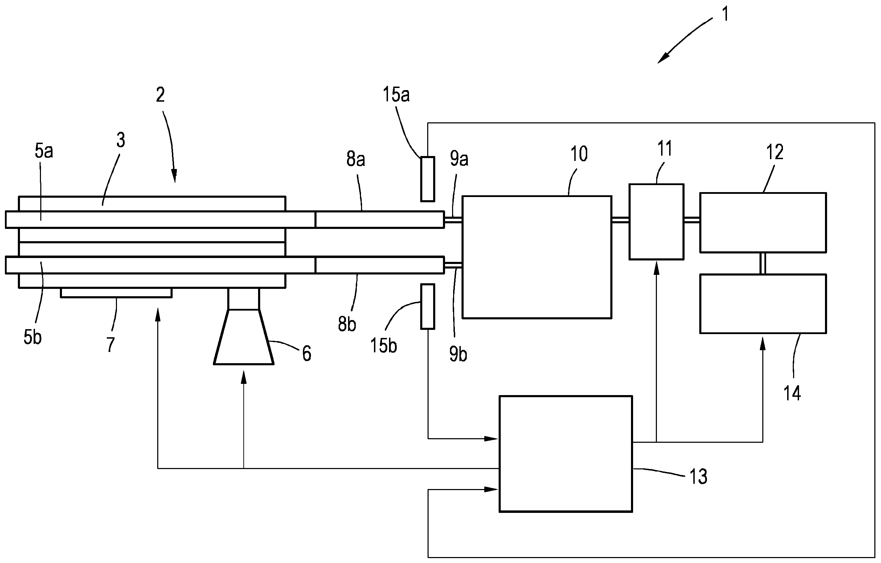

Weitere Vorteile, Merkmale und Einzelheiten der Erfindung ergeben sich aus dem im Folgenden beschriebenen Ausführungsbeispiel sowie anhand der Zeichnung.

In der Figur ist eine Prinzipdarstellung eines erfindungsgemäßen Extruders 1 gezeigt, umfassend ein Arbeitsteil 2 mit einem Zylinder 3, der wie zumeist üblich aus einer Vielzahl einzelner, aneinander gereihter und miteinander verbundener Zylindersegmente besteht. In dem Zylinder 3 sind, hier hervorgehoben dargestellt, zwei Schneckenwellen 5a, 5b drehbar aufgenommen. Der Zylinder 3 weist hierzu eine als Brillenbohrung ausgeführte Zylinderbohrung auf, wie an sich bekannt.

Am Arbeitsteil 2 ist exemplarisch angeordnet respektive ihm zugeordnet eine weitere Einrichtung in Form einer Zuführeinrichtung 6, wobei selbstverständlich auch mehrere solcher Zuführeinrichtungen 6 vorgesehen sein können. Über die Zuführeinrichtung 6 werden das oder die zu verarbeitenden Materialien aufgegeben. Vorgesehen ist ferner eine Heizeinrichtung 7, über die der Zylinder 3 temperiert werden kann, und die auch nur exemplarisch angedeutet ist.

Die Schneckenwellen 5a, 5b sind über jeweilige Verbindungselemente 8a, 8b, die als Muffenkupplungen ausgeführt sind, mit den beiden Abtriebswellen 9a, 9b des Getriebes 10 drehfest verbunden. Das Getriebe 10, ein Untersetzungsgetriebe, ist über eine schaltbare Kupplung 11, bei der es sich um eine pneumatisch schaltbare Kupplung oder eine elektromagnetisch schaltbare Kupplung handelt, mit dem Motor 12 gekoppelt. Über die Kupplung 11 wird folglich die Rotation der Motorabtriebswelle auf das Getriebe 10 übertragen, das über die Getriebeabtriebswellen 9a, 9b und die Verbindungselemente 8a, 8b auf die Schneckenwellen 5a, 5b übertragen wird.

Vorgesehen ist des Weiteren eine Steuerungseinrichtung 13, die den Betrieb der wesentlichen oder aller Komponenten des Extruders 1 steuert. Wie dargestellt kann sie zum einen den Betrieb der Zuführeinrichtung 6 wie auch der Heizeinrichtung 7 steuern. Sie steuert darüber hinaus über einen Umrichter 14 auch den Betrieb des Motors 12, um das vom Motor 12 erzeugte respektive gelieferte Drehmoment sowie die Drehzahl zu steuern.

Ferner steuert die Steuerungseinrichtung 13 auch die schaltbare Kupplung 11. Handelt es sich bei dieser um eine druckbeaufschlagte Reibkupplung, so kann diese aktiv geschaltet werden, indem über die Steuerungseinrichtung der Luftdruck, über den die Reibkupplungsscheiben zusammengepresst werden, gesteuert wird. Je nachdem, wie hoch der Anpressdruck der Scheiben ist, kann ein unterschiedlich hohes Drehmoment übertragen werden respektive ein unterschiedlich hohes Abschaltmoment im Falle einer Überlast eingestellt werden. Handelt es sich bei der Kupplung 11 um eine elektromagnetisch schaltbare Kupplung, so können über einen Elektromagneten zwei verzahnte Scheiben formschlüssig aneinandergepresst werden, wobei je nachdem, wie stark die Scheiben verpresst werden, ein unterschiedlich hohes Drehmoment übertragen werden respektive ein unterschiedlich hohes Abstellmoment eingestellt werden kann. Unabhängig davon, wie nun konkret die schaltbare Kupplung ausgeführt ist, kann die Kupplung 11 durch entsprechende Ansteuerung derselben über die Steuerungseinrichtung 13 auch aktiv geöffnet werden.

Vorgesehen sind ferner zwei Messeinrichtungen 15a, 15b, die im gezeigten Beispiel den Verbindungselementen 8a, 8b, also den beiden Muffenkupplungen, zugeordnet ist. Sie könnten aber auch gleichermaßen den Abtriebswellen 9a, 9b zugeordnet sein. Die Messeinrichtungen 15a, 15 dienen zur individuellen Erfassung separater Ist-Drehmomente an den Verbindungselementen 8a, 8b respektive, wenn dort angeordnet, an den Abtriebswellen 9a, 9b. Diese Messeinrichtungen 15a, 15b kommunizieren mit der Steuerungseinrichtung 13, so dass dieser kontinuierlich die erfassten Ist-Drehmomente gegeben werden.

Bei den Messeinrichtungen 15a, 15b handelt es sich bevorzugt um berührungslos arbeitende Messeinrichtungen, vorzugsweise um solche, die die Erfassung eines Magnetfelds respektive die Erfassung einer Veränderung des Magnetfelds ermöglichen. Hierzu sind zweckmäßigerweise die Verbindungselemente 8a, 8b ganz oder zumindest abschnittsweise mit einer Permanentmagnetisierung belegt, so dass sie folglich ein permanentes Magnetfeld erzeugen. Bei Zuordnung der Messeinrichtungen zu den Abtriebswellen 9a, 9a werden die Abtriebswellen entsprechend magnetisiert. Im Arbeitsfall, wenn Drehmoment übertragen wird, kommt es zu einer mechanischen Belastung der jeweiligen Verbindungselemente 8a, 8b respektive der Abtriebswellen 9a, 9b, welche Belastung wiederum zu einer Veränderung des Magnetfelds führt. Die Messeinrichtungen 15a, 15b umfassen entsprechende Magnetsensoren, beispielsweise in Form von Hallsensoren, die dieses Magnetfeld respektive die Feldänderung erfassen. Anhand des jeweiligen Messsignals kann nun die jeweilige Messeinrichtung 15a, 15b oder spätestens die Steuerungseinrichtung 13 das jeweilige Ist-Drehmoment, das am Verbindungselement 8a, 8b oder der Abtriebswelle 9a, 9b anliegt, ermitteln. Dieses jeweilige Ist-Drehmoment kann der jeweiligen Schneckenwelle 5a, 5b zugeordnet werden, das dortseits anliegende Ist-Drehmoment entspricht im Wesentlich dem gemessenen Drehmoment, nachdem die Messung ja unmittelbar im Verbindungsbereich der Schneckenelemente zum Getriebe gemessen wird und nicht im Kupplungsbereich. Die Steuerungseinrichtung ist nun in der Lage, gestützt auf diese individuellen Ist-Drehmomentwerte zu erfassen, ob eine Betriebssituation gegeben ist, die ein aktives Öffnen der Kupplung 11 und damit ein Trennen des Getriebes 10 vom Motor 12 erfordert, oder nicht.

Ein solcher Umstand kann gegeben sein, wenn eines der ermittelten Ist-Drehmomente höher ist als ein Drehmomentgrenzwert. Jeder Schneckenwelle 5a, 5b ist ein Momentengrenzwert zugeordnet, der nicht überschritten werden soll. Hierzu kann es jedoch im Betrieb kommen, beispielsweise wenn über die Zufuhreinrichtung 6 nur eine der Schneckenwellen 5a, 5b belastet wird. Die Summe der beiden einzelnen Ist-Momente kann in diesem Fall noch weit unterhalb des definierten Summenabschaltmoments der Kupplung 11 liegen. Gleichwohl ist eine Überlastung einer Schneckenwelle 5a, 5b zu besorgen. Erkennt die Steuerungseinrichtung 13 dies wird die aktiv die Kupplung 11 geöffnet.

Die Steuerungseinrichtung 13 kann auch einen etwaigen Unterschied zwischen den beiden Ist-Drehmomenten ermitteln, mithin also ein Unterschiedsmoment. Ist dieses größer als ein Grenzwert, liegt ebenfalls eine extrem stark unterschiedliche Belastung der einzelnen Schneckenwellen 5a, 5b vor. Auch dies kann ein Hinweis auf eine Überlastsituation sein, die zu einem aktiven Öffnen der Kupplung 11 führt.

Da die Ist-Drehmomente über die Messeinrichtungen 15a, 15b kontinuierlich an die Steuerungseinrichtung 13 gegeben werden, kann diese folglich den zeitlichen Verlauf der jeweils ermittelten Messwerte erfassen. Stellt sich nun ein hinreichend steiler Anstieg respektive Gradient eines ermittelten Drehmomentwerts ein, so kann die Steuerungseinrichtung den Gradienten ermitteln und mit einem Vergleichsgradienten vergleichen. Ist der Anstieg hinreichend steil, was sich durch den Vergleich ergibt, so kann dies ebenfalls eine Überlastsituation anzeigen, wiederum schaltet die Steuerungseinrichtung 13 die Kupplung 11 zum Öffnen.

Schließlich kann, gestützt auf den zeitlichen Verlauf der Ist-Drehmomentwerte, auch eine etwaige Drehmomentwertschwingung erfasst werden sowie deren Amplitude bestimmt werden. Eine leichte Schwingung liegt in der Regel vor, ist jedoch die Schwingung zu stark, so kann auch dies auf eine etwaige Überlastsituation hinweisen. Zeigt nun der Vergleich der ermittelten Ist-Schwingungsamplitude mit einer Vergleichsamplitude, dass die Ist-Schwingungsamplitude die Vergleichsamplitude übersteigt, so kann auch dies zu einem aktiven Öffnen der Kupplung führen.

Mit dem Öffnen der Kupplung 11 einher geht auch die entsprechende Ansteuerung des Umrichters 14 zur Reduzierung der Drehzahl des Motors 12, wobei dies bevorzugt im unmittelbar zeitlichen Zusammenhang mit dem Öffnen der Kupplung 11 erfolgt.

## Patentansprüche

1. Extruder umfassend ein Arbeitsteil bestehend aus einem Zylinder und wenigstens zwei darin drehbar aufgenommenen Schneckenwellen, ein Getriebe mit wenigstens zwei Abtriebswellen, wobei jede Abtriebswelle mit einer Schneckenwelle über ein Verbindungselement drehfest verbunden ist, einen das Getriebe antreibenden Motor, der mit dem Getriebe über eine Kupplung gekoppelt ist, sowie eine Steuerungseinrichtung, wobei jedem Verbindungselement (8a, 8b) oder jeder Abtriebswelle (9a, 9b) eine separate Messeinrichtung (15a, 15b) zur Ermittlung des anliegenden Drehmoments zugeordnet ist, wobei die Messeinrichtungen (15a, 15b) mit der Steuerungseinrichtung (13) kommunizieren, die in Abhängigkeit der einzelnen ermittelten Drehmomente die als schaltbare Kupplung (11) ausgeführte Kupplung steuert, **dadurch gekennzeichnet,**
**dass** die Steuerungseinrichtung (13) dazu eingerichtet ist, die Kupplung (11) sowohl zu öffnen, wenn ein ermitteltes Drehmoment einen Drehmomentgrenzwert übersteigt, als auch, wenn der Unterschied zwischen den beiden ermittelten Drehmomenten einen Grenzwert übersteigt, als auch, wenn der Gradient des Anstiegs eines ermittelten Drehmoments einen Gradientengrenzwert übersteigt.

2. Extruder nach Anspruch 1, **dadurch gekennzeichnet, dass** die Steuerungseinrichtung (13) weiterhin zum Öffnen der Kupplung (11) ausgebildet ist, wenn der zeitliche Verlauf eines ermittelten Drehmoments eine Schwingung zeigt, deren Amplitude größer ist als eine Vergleichsamplitude.

3. Extruder nach einem der vorangehenden Ansprüche, **dadurch gekennzeichnet, dass** die Steuerungseinrichtung (13) zeitgleich mit oder unmittelbar nach dem Öffnen der Kupplung (11) einen Frequenzumrichter (14) zur Reduzierung der Drehzahl des Motors (12) ansteuert.

4. Extruder nach einem der vorangehenden Ansprüche, **dadurch gekennzeichnet, dass** die schaltbare Kupplung (11) eine pneumatisch betätigbare Kupplung oder eine elektromagnetisch betätigbare Kupplung ist.

5. Extruder nach einem der vorangehenden Ansprüche, **dadurch gekennzeichnet, dass** die Messeinrichtungen (15a, 15b) berührungslos arbeitende Messeinrichtungen sind.

6. Extruder nach Anspruch 5, **dadurch gekennzeichnet, dass** die Verbindungselemente (8a, 8b) oder die Abtriebswellen (9a, 9b) eine Magnetisierung tragen, die ein Magnetfeld, das in Abhängigkeit des gegebenen Drehmoments veränderbar ist, erzeugt, welches Magnetfeld von einem Magnetfeldsensor erfasst wird.

7. Extruder nach einem der Ansprüche 1 bis 5, **dadurch gekennzeichnet, dass** die Messeinrichtung eine optische Messeinrichtung ist.

8. Extruder nach einem der Ansprüche 1 bis 5, **dadurch gekennzeichnet, dass** die Messeinrichtung wenigstens einen Dehnungsmessstreifen, der am Verbindungselement (8a, 8b) oder der Abtriebswelle (9a, 9b) angeordnet ist, aufweist.

9. Verfahren zum Betrieb eines Extruders umfassend ein Arbeitsteil bestehend aus einem Zylinder und wenigstens zwei darin drehbar aufgenommenen Schneckenwellen, ein Getriebe mit wenigstens zwei Abtriebswellen, wobei jede Abtriebswelle mit einer Schneckenwelle über ein Verbindungselement drehfest verbunden ist, einen das Getriebe antreibenden Motor, der mit dem Getriebe über eine Kupplung gekoppelt ist, sowie eine Steuerungseinrichtung, wobei jedem Verbindungselement oder jeder Abtriebswelle eine separate Messeinrichtung zur Ermittlung des anliegenden Drehmoments zugeordnet ist, wobei die Messeinrichtungen mit der Steuerungseinrichtung kommunizieren, **dadurch gekennzeichnet, dass** die Steuerungseinrichtung dazu eingerichtet ist, in Abhängigkeit der einzelnen ermittelten Drehmomente die als schaltbare Kupplung ausgeführte Kupplung sowohl zu öffnen, wenn ein ermitteltes Drehmoment einen Drehmomentgrenzwert übersteigt, als auch wenn der Unterschied zwischen den beiden ermittelten Drehmomenten einen Grenzwert übersteigt, als auch, wenn der Gradient des Anstieges eines ermittelten Drehmoments einen Gradientengrenzwert übersteigt.

10. Verfahren nach Anspruch 9, **dadurch gekennzeichnet, dass** die Steuerungseinrichtung die Kupplung weiterhin öffnet, der zeitliche Verlauf eines ermittelten Drehmoments eine Schwingung zeigt, deren Amplitude größer ist als eine Vergleichsamplitude.

11. Verfahren nach einem der Ansprüche 9 oder 10, **dadurch gekennzeichnet, dass** die Steuerungseinrichtung zeitgleich mit oder unmittelbar nach dem Öffnen der Kupplung einen Frequenzumrichter zur Reduzierung der Drehzahl des Motors ansteuert.

## Claims

1. Extruder comprising an operative unit consisting of a cylinder and at least two screw shafts rotatably accommodated therein, a gear unit having at least two output shafts, wherein each output shaft is connected via a connecting element to a screw shaft for rotation therewith, a motor which drives the gear unit and is coupled to the gear unit via a clutch, and a control device, wherein each connecting element (8a, 8b) or each output shaft (9a, 9b) is assigned a separate measuring device (15a, 15b) for determining the applied torque, wherein the measuring devices (15a, 15b) communicate with the control device (13), which controls the clutch configured as a switchable clutch (11) in dependence on the individual torques determined, **characterized in that** the control device (13) is designed for opening the clutch (11) not only when a determined torque exceeds a torque limit value but also when the difference between the two determined torques exceeds a limit value and when the gradient of the increase of a determined torque exceeds a gradient limit value.

2. Extruder according to Claim 1, **characterized in that** the control device (13) is designed for also opening the clutch (11) when the temporal profile of a determined torque displays an oscillation of an amplitude greater than a comparison amplitude.

3. Extruder according to either of the preceding claims, **characterized in that**, simultaneously with or immediately after opening the clutch (11), the control device (13) activates a frequency converter (14) in order to reduce the speed of the motor (12).

4. Extruder according to one of the preceding claims, **characterized in that** the switchable clutch (11) is a pneumatically actuatable clutch or an electromagnetically actuatable clutch.

5. Extruder according to one of the preceding claims, **characterized in that** the measuring devices (15a, 15b) are contactlessly operating measuring devices.

6. Extruder according to Claim 5, **characterized in that** the connecting elements (8a, 8b) or the output shafts (9a, 9b) have a magnetization which generates a magnetic field which is variable in dependence on the given torque and is sensed by a magnetic-field sensor.

7. Extruder according to one of Claims 1 to 5, **characterized in that** the measuring device is an optical measuring device.

8. Extruder according to one of Claims 1 to 5, **characterized in that** the measuring device has at least one strain gauge, which is arranged on the connecting element (8a, 8b) or the output shaft (9a, 9b) .

9. Method for operating an extruder comprising an operative unit consisting of a cylinder and at least two screw shafts rotatably accommodated therein, a gear unit having at least two output shafts, wherein each output shaft is connected via a connecting element to a screw shaft for rotation therewith, a motor which drives the gear unit and is coupled to the gear unit via a clutch, and a control device, wherein each connecting element or each output shaft is assigned a separate measuring device for determining the applied torque, wherein the measuring devices communicate with the control device, **characterized in that** the control device is designed for opening the clutch configured as a switchable clutch independence on the individual torques determined, not only when a determined torque exceeds a torque limit value but also when the difference between the two determined torques exceeds a limit value and when the gradient of the increase of a determined torque exceeds a gradient limit value.

10. Method according to Claim 9, **characterized in that** the control device also opens the clutch when the temporal profile of a determined torque displays an oscillation of an amplitude greater than a comparison amplitude.

11. Method according to either of Claims 9 and 10, **characterized in that**, simultaneously with or immediately after opening the clutch, the control device activates a frequency converter in order to reduce the speed of the motor.

## Revendications

1. Extrudeuse, comprenant une partie de travail composée d'un cylindre et d'au moins deux arbres à vis sans fin accueillis de manière rotative dans celui-ci, un engrenage comprenant au moins deux arbres de prise de force, chaque arbre de prise de force étant relié en rotation solidaire à un arbre à vis sans fin par le biais d'un élément de liaison, un moteur qui entraîne l'engrenage, lequel est accouplé à l'engrenage par le biais d'un accouplement, ainsi qu'un dispositif de commande, un dispositif de mesure (15a, 15b) séparé destiné à déterminer le couple appliqué étant associé à chaque élément de liaison (8a, 8b) ou à chaque arbre de prise de force (9a, 9b), les dispositifs de mesure (15a, 15b) communiquant avec le dispositif de commande (13), lequel commande l'accouplement réalisé sous la forme d'un accouplement embrayable (11) en fonction des couples déterminés individuellement, **caractérisée en ce que** le dispositif de commande (13) est conçu pour ouvrir l'accouplement (11) aussi bien lorsqu'un couple déterminé dépasse une valeur limite de couple que lorsque la différence entre les deux couples déterminés dépasse une valeur limite, et aussi lorsque le gradient de l'accroissement d'un couple déterminé dépasse une valeur limite de gradient.

2. Extrudeuse selon la revendication 1, **caractérisée en ce que** le dispositif de commande (13) est en outre configuré pour ouvrir l'accouplement (11) lorsque l'évolution dans le temps d'un couple déterminé indique une oscillation dont l'amplitude est supérieure à une amplitude de comparaison.

3. Extrudeuse selon l'une des revendications précédentes, **caractérisée en ce que** le dispositif de commande (13), simultanément ou immédiatement après l'ouverture de l'accouplement (11), commande un convertisseur de fréquence (14) en vue de réduire la vitesse de rotation du moteur (12).

4. Extrudeuse selon l'une des revendications précédentes, **caractérisée en ce que** l'accouplement embrayable (11) est un accouplement actionnable pneumatiquement ou un accouplement actionnable de manière électromagnétique.

5. Extrudeuse selon l'une des revendications précédentes, **caractérisée en ce que** les dispositifs de mesure (15a, 15b) sont des dispositifs de mesure qui fonctionnent sans contact.

6. Extrudeuse selon la revendication 5, **caractérisée en ce que** les éléments de liaison (8a, 8b) ou les arbres de prise de force (9a, 9b) portent une magnétisation qui génère un champ magnétique, lequel est modifiable en fonction du couple donné, ledit champ magnétique étant détecté par un capteur de champ magnétique.

7. Extrudeuse selon l'une des revendications 1 à 5, **caractérisée en ce que** le dispositif de mesure est un dispositif de mesure optique.

8. Extrudeuse selon l'une des revendications 1 à 5, **caractérisée en ce que** le dispositif de mesure possède au moins une jauge de contrainte qui est disposée au niveau de l'élément de liaison (8a, 8b) ou de l'arbre de prise de force (9a, 9b).

9. Procédé pour faire fonctionner une extrudeuse, comprenant une partie de travail composée d'un cylindre et d'au moins deux arbres à vis sans fin accueillis de manière rotative dans celui-ci, un engrenage comprenant au moins deux arbres de prise de force, chaque arbre de prise de force étant relié en rotation solidaire à un arbre à vis sans fin par le biais d'un élément de liaison, un moteur qui entraîne l'engrenage, lequel est accouplé à l'engrenage par le biais d'un accouplement, ainsi qu'un dispositif de commande, un dispositif de mesure séparé destiné à déterminer le couple appliqué étant associé à chaque élément de liaison ou à chaque arbre de prise de force, les dispositifs de mesure communiquant avec le dispositif de commande, **caractérisé en ce que** le dispositif de commande est conçu pour, en fonction des couples déterminés individuellement, ouvrir l'accouplement réalisé sous la forme d'un accouplement embrayable aussi bien lorsqu'un couple déterminé dépasse une valeur limite de couple que lorsque la différence entre les deux couples déterminés dépasse une valeur limite, et aussi lorsque le gradient de l'accroissement d'un couple déterminé dépasse une valeur limite de gradient.

10. Procédé selon la revendication 9, **caractérisé en ce que** le dispositif de commande ouvre en outre l'accouplement, lorsque l'évolution dans le temps d'un couple déterminé indique une oscillation dont l'amplitude est supérieure à une amplitude de comparaison.

11. Procédé selon l'une des revendications 9 ou 10, **caractérisé en ce que** le dispositif de commande, simultanément ou immédiatement après l'ouverture de l'accouplement, commande un convertisseur de fréquence en vue de réduire la vitesse de rotation du moteur.
